# EUROPEAN PATENT APPLICATION

(11) **EP 4 574 233 A1**
(43) Date of publication of application: **25.06.2025**
(21) Application number: 23219339.1
(22) Date of filing: 21.12.2023
(51) Int. Cl.: B01D 45/16, H01S 3/02

(54) **OPTICAL AMPLIFIER AND COMPONENTS THEREFOR**

(71) Applicant: ASML Netherlands B.V., 5500 AH Veldhoven (NL); TRUMPF Lasersystems for Semiconductor Manufacturing SE, 71254 Ditzingen (DE)
(72) Inventor: DILISSEN, Ruben, Hendrik, C, 5500AH Veldhoven (NL); HETTKAMP, Philipp, 71254 Ditzingen (DE); ALVAREZ ALONSO, Diego, Alejandro, 5500AH Veldhoven (NL); WIESWEG, Florian, 71254 Ditzingen (DE)
(74) Representative: ASML Netherlands B.V.

(57) **Abstract**

An optical amplifier 200 comprising a flow passageway for a gas of the optical amplifier 200, a first swirl insert 150 in the flow passageway arranged to impart a desired swirling flow pattern to the gas, and a cyclonic particle trap 154 either or both around or downstream of the swirl insert 150 for collecting particle contamination from a radially outer portion of the swirling gas. The swirl insert comprises vanes 134 arranged to impart a cyclonic or helical flow to the gas, whereby particle contamination in the gas tends to move into or towards the radially outer portion of the swirling gas.

## Description

### FIELD

The present invention relates to an apparatus for controlling or reducing particle contamination in an optical amplifier. The apparatus may form a component of an optical amplifier, which may be configured to amplify a laser beam, or a component of a power amplifier for laser powered plasma based EUV generation. The present invention also relates to an optical amplifier (or a power amplifier) comprising such an apparatus. The amplifier may form part of an amplification system for a laser system. The laser system may comprise a carbon dioxide (CO2) laser, which may form part of a laser produced plasma (LPP) radiation source. The LPP radiation source may form part of a lithographic system, i.e. provide radiation to a lithographic apparatus. The present invention also relates to a method of controlling or reducing particle contamination in an optical amplifier, or a power amplifier, for example for laser powered plasma based EUV generation.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern at a patterning device (e.g., a mask) onto a layer of radiation-sensitive material (resist) provided on a substrate.

To project a pattern on a substrate a lithographic apparatus may use electromagnetic radiation. The wavelength of this radiation determines the minimum size of features which can be formed on the substrate. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

One known type of EUV radiation source is a laser produced plasma (LPP) source in which tin droplets are irradiated by laser pulses so as to form a tin plasma which emits EUV radiation. The laser pulses are typically high power in order to generate the tin plasma. In order to achieve the desired power, the laser pulses are typically amplified in an amplification system that comprises a plurality of optical amplifiers (for example single-pass amplifiers arranged in series). These may be known as power amplifiers.

In these systems, a laser pulse (the laser beam) is amplified with the power amplifiers with the use of a gas, or gas mix. The gas mix passes through a fluid passageway through the system, for example between a cooler and an outlet, driven by a pump or blower. The outlet may be via an amplification chamber, which may be in the form of a quartz pipe. This flow can be in the area of a mirror device of the system, and thus it is important for the gas to be substantially free from particle contamination, as particle contamination on the mirrors can lead to premature failure of the mirrors due to the power of the laser.

The fluid passageway may be a circulating path through the optical amplifier, and the gas or gas mix will be a gas laser medium flowing at high speed around the circulating path.

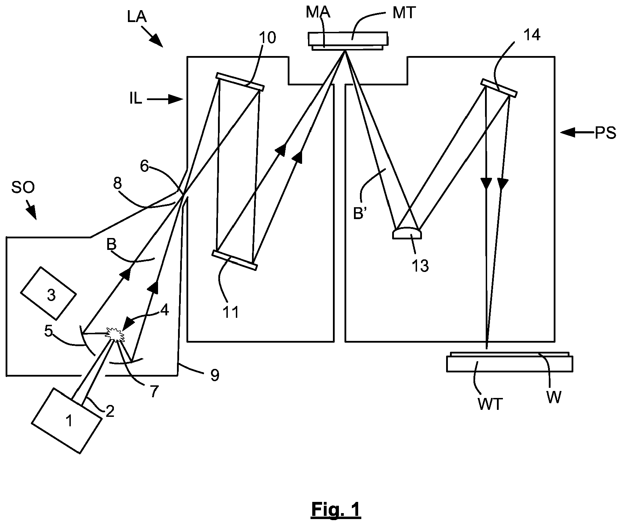

The lithographic apparatus will typically comprise multiple mirror devices. One configuration is shown in Figure 1, but often many more mirror devices are present than that shown in Figure 1. For example, multiple reflective surfaces may be present within an amplification chain arranged to amplify a power output of a laser beam. Particle contamination on these reflective surfaces can lead to the premature failure as the particle contamination can be impacted by the laser beam, which in turn can heat up the particle contamination and thus the reflective surfaces, rapidly causing damage to the reflective surface. Minimising or reducing particle contamination is thus important.

An approach for particle contamination control used in the prior art consists of grease traps in fluid passageways of the system. These grease traps are conventionally placed outside of the direct gas stream. They catch particle contamination based on inertia. For example, the grease trap may be positioned at the end of a straight fluid passageway, and thus the particles' inertia takes the particles into the grease trap, where they stick to vacuum grease applied in the grease trap and thus get removed from the fluid flow.

In such prior art grease traps, the vacuum grease applied in the trap captures the particles and prevents or resists re-introduction of the particle contamination therefrom back into the gas stream. However, the grease trap's efficiency (i.e. the degree to which it captures particle contamination) and suitable installation locations, can be limited by the configuration of the fluid passageways, as it relies upon the inertia of the particles to work, and it needs to be before a corner, but away from the main flow route to avoid or reduce re-introduction of the particles into the main flow. As a result, these grease traps - multiple of which may be in any given system - require additional volumes in the pipework to function, and in particular extended corners, as they must extend beyond corners of the fluid passageways in order to rely upon that inertia. Furthermore, the vacuum grease is a constant outgassing load to the vacuum system and there is a risk that small parts of the grease may be introduced into the gas stream due to the impact of the particles therewith causing it to "splash".

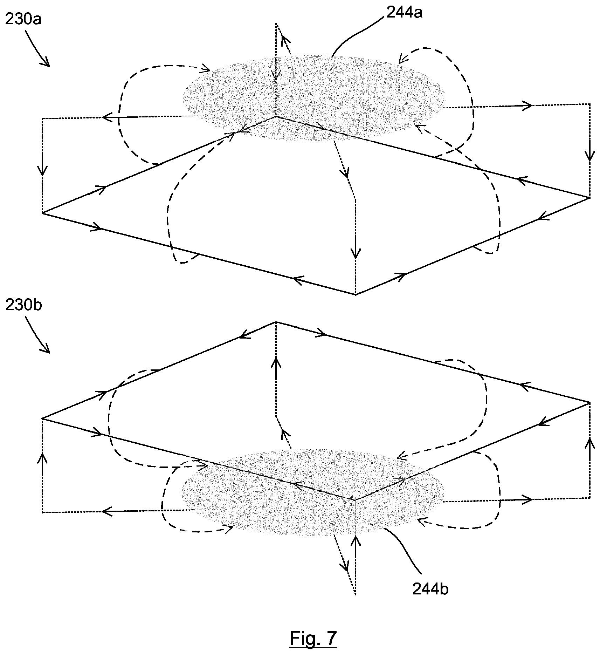

For optimal amplification, the gas mix may be supplied with a swirl. This might occur before the gas mix enters the outlet or quartz pipe. The swirl can be introduced using one or more swirl insert such as a turbulator and a helical or screw structure, as shown, for example, in Figure 7. In the context of this disclosure, the terms swirl insert and turbulators may be interchangeably used. In the prior art, the grease traps are typically located upstream of such a turbulator, in a branch extending from a corner in the fluid passageway just prior to the turbulator. This removes the particle contamination from the gas mix before the gas mix enters the turbulator.

A further known approach for particle contamination control in laser systems include bypass cyclone systems. See, for example, US2003/0179797A1 and CN202602072U. In these prior art documents, the fluid passageway diverts through a cyclone separation device to separate particle contamination out of the gas before returning the returning the gas to the gas circulation path of the laser system. These devices take up even more room in the system, and significantly increase the volume of the circulating path around the laser system.

It is also observed that there is a recognised disadvantage with bypass cyclone systems, as well as turbulators, helical or screw structures and swirl inserts in general. They all introduce a pressure drop in the gas circuit. As the gas flow correlates with amplification, this relative pressure drop can limit the efficiency of the amplification (and will increase the power required to pump the gas mix through the system).

The present invention seeks to provide an alternative or additional configuration for particle contamination control, and one that minimises the pressure drop in the gas circuit. In particular, it would be desirable to provide alternative or improved optical amplifiers, and components therefor, that may at least partially address one or more problems in these and other known arrangements, whether identified herein or otherwise.

### SUMMARY

According to a first aspect of the present invention there is provided an apparatus for controlling or reducing particle contamination in a gas passing to, around or through an optical amplifier, the apparatus comprising:
a tube defining a flow passageway through the tube;
at least two swirl inserts, the swirl inserts arranged to impart a desired swirling flow pattern to the gas through at least a part of the tube; and
at least one cyclonic particle trap either or both around or downstream of at least one of the swirl inserts for collecting particle contamination from a radially outer portion of the swirling gas;
wherein at least the first swirl insert comprises vanes arranged to impart a cyclonic or helical flow to the gas, whereby particle contamination in the gas tends to move into or towards the radially outer portion of the swirling gas.

With the present invention, the gas swirls with a cyclonic or helical flow around a flow direction of the gas through the flow passageway.

With the present invention, the optical amplifier can be an amplifier arranged to amplify the power level of a laser beam.

In some embodiments, the gas is a gas mix.

In some embodiments, the tube is for installation in, upstream of, or as a part of an amplification chamber of the optical amplifier.

In some embodiments, the at least two swirl inserts are in the tube.

The at least two swirl inserts are typically configured such that a first swirl insert of the at least two swirl inserts is a first of the at least two swirl inserts in a flow direction through the tube, and a second swirl insert of the at least two swirl inserts is downstream of the first swirl insert. In some embodiments, the tube is a first tube, and the second swirl insert is in a second tube, downstream of the first tube, and the at least one cyclonic particle trap bridges a gap between the two tubes. With this configuration, the cyclonic particle trap can maintain containment of the gas flowing through the apparatus.

In some embodiments, the first and second tubes are co-axially arranged.

In some embodiments, the tube is instead a continuous tube from the first insert to the second swirl insert, albeit with one or more slot or aperture in its sidewall, the or each slot or aperture being located along at least a partial length of the tube, and the at least one cyclonic particle trap bridging the one or more slot or aperture. Again this is to maintain containment of the gas flowing through the apparatus.

In some embodiments, the first swirl insert is a turbulator for swirling a gas mix flowing thorough the turbulator such that it swirls downstream of the turbulator, for example through the tube or tubes.

In some embodiments, the second swirl insert is a helical or screw structure for swirling a gas mix flowing thorough the turbulator to match the shape of electrodes as the gas swirls therethrough or downstream thereof.

In some embodiments, the at least one cyclonic particle trap comprises a first cyclonic particle trap that is either or both around or downstream of the first swirl insert. In some embodiments, it is not around or downstream of the second swirl insert.

Features of the first cyclonic particle trap may be present in each cyclonic particle trap, in so far as its context or environment allows this. Alternatively, each cyclonic particle trap may have different configurations. For example, the configuration may need to be adapted for the location thereof in the optical amplifier due to surrounding equipment.

In some embodiments, the first cyclonic particle trap is cylindrical.

In other embodiments, the first cyclonic particle trap comprises tapering wall.

In some embodiments, the tapering wall is an outer wall.

In some embodiments, the tapering wall generates a frustoconical form for first cyclonic particle trap.

In some embodiments, the tapering wall has a circular cross section and is arranged with a smaller diameter at (or closer to or adjacent to) an upstream end of the first cyclonic particle trap and a larger diameter at (or closer to or adjacent to) a downstream end of the first cyclonic particle trap.

In some embodiments, the tube is oriented in a vertical configuration, for example such that the gas flows in a downwards direction from the first swirl insert.

In some embodiments, the first cyclonic particle trap comprises an annular collection tray.

With some configurations, the annular collection tray may surround the tube to define a trough into which trapped particles may collect.

In some embodiments, the annular collection tray is at the downstream end of the first cyclonic particle trap.

In some embodiments, the gap between first and second tubes, or the slot(s) or aperture(s) is/are positioned upstream of the annular collection tray. This position will usually be closer to the upstream end of the first cyclonic particle trap.

In some embodiments, the first cyclonic particle trap comprises a portion or wall with a grease lining. The grease can help to resist any tendency for the particles to escape back out of the trap after collection in the first cyclonic particle trap.

In some embodiments, the first cyclonic particle trap comprises a labyrinthine portion. This may similarly resist any tendency for the particles to escape back out of the trap after collection in the first cyclonic particle trap - for example labyrinthine portion may comprise a series of overlapping and/or intertwining walls and/or overhangs. These walls or overhangs may have the grease lining, although that is optional.

In some embodiments there is no grease lining, or grease per se, in the first cyclonic particle trap.

In some embodiments, the first cyclonic particle trap replaces a grease trap in the optical amplifier.

Usually the first cyclonic particle trap surrounds at least part of the tube.

In some embodiments, the first cyclonic particle trap comprises a segmented design with segmented collection chambers spaced around the tube.

In some embodiments, the first cyclonic particle trap comprises a tapering distal wall, tapering radially outwards and forwards (i.e. downstream). This tapering distal wall can help to resist any tendency for the particles to escape back out of the trap after collection in the first cyclonic particle trap. In some embodiments, this tapering distal wall is in multiple parts, each part being a distal wall of the segmented collection chambers.

In some embodiments, the slots or apertures are located such that there is at least one slot or aperture for each of the segmented collection chambers. The slots or apertures may be positioned upstream of the tapering distal wall. These slots or apertures allow the particles to enter the segmented collection chambers.

In some embodiments, the first tube is larger (bigger diameter) than the second tube.

In some embodiments, the first tube overlaps the second tube, and thus may define an annular gap between first and second tubes. That annular gap may form the annular collection tray, with a connecting wall between the first tube and the second tube defining a base for the annular collection tray. In this embodiment the first swirl insert is positioned upstream of the second tube, such that swirling gas exiting the first swirl insert can separate the particles in its gas into the annular gap.

In some embodiments, the annular collection tray has a slot or groove in its base for collection of the particles - and potentially for extraction of the particles by a suction device connected thereto. In other embodiments, where extraction is desired, alternative extraction facilities may be provided for the cyclonic particle trap.
In some embodiments, the first tube has a tapering end portion, which tapering end portion expands in a downstream direction. In some embodiments, this tapering end portion at least partially overlaps the second tube, and a connecting wall at its end connects it to the second tube. This again defines an annular gap between the first and second tubes, but now with a tapering outer profile. This defines the first cyclonic particle trap. An upstream end of the second tube may be positioned downstream of the upstream end of the tapering end portion. This then defined a larger space through which the particles may enter the first cyclonic particle trap prior to their collection in the annular collection tray surrounding the upstream end of the second tube.

In some embodiments there is only one swirl insert. As such, according to a second aspect of the present invention there is provided an optical amplifier comprising:
a flow passageway for a gas of the optical amplifier;
a first swirl insert in the flow passageway arranged to impart a desired swirling flow pattern to the gas; and
a cyclonic particle trap either or both around or downstream of the swirl insert for collecting particle contamination from a radially outer portion of the swirling gas;
wherein the swirl insert comprises vanes arranged to impart a cyclonic or helical flow to the gas, whereby particle contamination in the gas tends to move into or towards the radially outer portion of the swirling gas.

As with the first aspect, this invention, in use, causes the gas to swirl with a cyclonic or helical flow around a flow direction of the gas through the flow passageway.

In some embodiments, the flow passageway is either in or upstream of an amplification chamber.

In some embodiments, the flow passageway is defined by one or more tubes. For example it may comprise the tube of the first aspect of the present invention. There can also be a second tube, as per some embodiments of the first aspect of the present invention.

In some embodiments, there is more than one swirl insert. In others there is only one swirl insert - the first swirl insert. Thus the optical amplifier comprises an apparatus for controlling or reducing particle contamination in a gas passing to, around or through an optical amplifier, the apparatus comprising:
the tube defining the flow passageway to through the tube;
the first swirl insert, the swirl inserts arranged to impart the desired swirling flow pattern to the gas through at least a part of the tube; and
at least the one cyclonic particle trap either or both around or downstream of the swirl insert for collecting particle contamination from a radially outer portion of the swirling gas;
wherein at least the first swirl insert comprises the vanes arranged to impart the cyclonic or helical flow to the gas, whereby particle contamination in the gas tends to move into or towards the radially outer portion of the swirling gas.

This apparatus can include the features of the first aspect, absent the second swirl insert. However, in other examples, the second aspect of the present invention may be in accordance with the first aspect of the present invention, i.e. with the second swirl insert.

In some embodiments, the swirl insert is a turbulator, and the cyclonic particle trap is either or both around or downstream of the turbulator.

The optical amplifier may form part of an amplification system for a laser system. The amplification system may comprise a plurality of optical amplifiers, at least one or each optical amplifier of the plurality of optical amplifiers comprising an optical amplifier as defined above.

According to a third aspect of the present invention there is provided a laser system comprising a laser configured to generate a laser beam and an optical amplifier as defined above. The laser system may comprise multiple such optical amplifiers. Each optical amplifier may comprise one or more apparatus for controlling or reducing particle contamination as defined above.

The laser system may comprise a carbon dioxide (CO2) laser.

The laser system may form part of a radiation source, such as a laser produced plasma (LPP) radiation source or some other such extreme ultraviolet (EUV) radiation source.

According to a fourth aspect of the present invention there is provided a radiation system comprising an extreme ultraviolet (EUV) radiation source, a flow passageway for a gas for flowing through a laser system of the radiation system, a swirl insert arranged to impart a desired swirling flow pattern to the gas, and a cyclonic particle trap either or both around or downstream of the swirl insert for collecting particle contamination from a radially outer portion of the swirling gas;
wherein the swirl insert comprises vanes arranged to impart a cyclonic or helical flow to the gas, whereby particle contamination in the gas tends to move into or towards the radially outer portion of the swirling gas mix.

The radiation system may form part of a lithographic system, i.e. provide radiation to a lithographic apparatus.

The radiation system may comprise one or more installations of the apparatus of the first aspect of the present invention and/or one or more installations of the optical amplifier of the second aspect of the present invention, and or more one or more laser systems of the third aspect of the present invention.

According to a fifth aspect of the present invention there is provided a lithographic system comprising a radiation system as defined above. The lithographic system may comprise a lithographic apparatus as described herein, or as otherwise known in the art.

According to a sixth aspect of the present invention there is provided a method of controlling or reducing particle contamination in an optical amplifier (or a laser system, or a radiation system, or a lithographic system, comprising such an optical amplifier), the method comprising:
installing a first swirl insert in a flow passageway of the optical amplifier; and
installing a cyclonic particle trap along the flow passageway;
wherein:
   the flow passageway is either or both in or upstream of an amplification chamber of the optical amplifier;
   the swirl insert comprises vanes arranged to impart a cyclonic or helical flow to the gas, whereby particle contamination in the gas tends to move into or towards a radially outer portion of the flowing gas;
   the cyclonic particle trap is either or both around or downstream of the swirl insert in the flow passageway; and
   the cyclonic particle trap is for collecting particle contamination from the radially outer portion of the swirling gas.

In some embodiments, the method uses the apparatus of the first aspect, or the optical amplifier of the second aspect.

In some embodiments, the method is carried out in the laser system of the third aspect, the radiation system of the fourth aspect or the lithographic system of the fifth aspect.

### BRIEF DESCRIPTION OF THE DRAWINGS

Embodiments of the invention will now be described, by way of example only, with reference to the accompanying schematic drawings, in which:
- Figure 1 depicts a lithographic system comprising a lithographic apparatus and a radiation source;
- Figure 2 depicts an exemplary amplification system for use in a laser system of the radiation system of Figure 1;
- Figure 3 is a schematic illustration of an optical amplifier arranged to amplify the power level of a laser beam, using a swirl insert and helical electrodes;
- Figure 4 is a perspective view of an example optical amplifier;
- Figure 5 illustrates an optical path defined by the optical amplifier shown in Figure 4;
- Figure 6 illustrates gas flow paths within the optical amplifier shown in Figure 4 along which a gain medium flows as part of a gain medium system;
- Figure 7 is an exploded view of the gas flow paths within the optical amplifier shown in Figure 3, separated into a first part of the gain medium system and a second part of the gain medium system;
- Figure 8 depicts a prior art configuration for trapping particle contamination using a grease trap;
- Figure 9 depicts a first embodiment of an alternative configuration for trapping particle contamination using a cyclonic particle trap downstream of a turbulator;
- Figure 10 depicts a second embodiment of cyclonic particle trap, again downstream of the turbulator;
- Figure 11 shows an external perspective view of a modified version of the cyclonic particle trap of Figure 10;
- Figure 12 shows a cut-away view of the cyclonic particle trap of Figure 11, illustrating chambers within the trap and slots for particle entry into the trap;
- Figure 13 depicts a fourth embodiment of cyclonic particle trap, again positioned downstream of the turbulator with a pipe diameter reduction downstream of the turbulator;
- Figure 14 depicts a fifth embodiment of cyclonic particle trap, again downstream of the turbulator and similar to the fourth embodiment, but with a particle contaminant collection groove; and
- Figure 15 depicts a sixth embodiment of cyclonic particle trap with an annular contaminant collection groove.

### DETAILED DESCRIPTION

Figure 1 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13, 14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13, 14 in Figure 1, the projection system PS may include a different number of mirrors (e.g., six or eight mirrors, or more or less mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO shown in Figure 1 is, for example, of a type which may be referred to as a laser produced plasma (LPP) source. A laser system 1, which may, for example, include a CO2¬ laser, is arranged to deposit energy via a laser beam 2 into a fuel, such as tin (Sn) which is provided from, e.g., a fuel emitter 3. Although tin is referred to in the following description, any suitable fuel may be used. The fuel may, for example, be in liquid form, and may, for example, be a metal or alloy. The fuel emitter 3 may comprise a nozzle configured to direct tin, e.g. in the form of droplets, along a trajectory towards a plasma formation region 4. The laser beam 2 is incident upon the tin at the plasma formation region 4. The deposition of laser energy into the tin creates a tin plasma 7 at the plasma formation region 4. Radiation, including EUV radiation, is emitted from the plasma 7 during de-excitation and recombination of electrons with ions of the plasma.

The EUV radiation from the plasma is collected and focused by a collector 5. Collector 5 comprises, for example, a near-normal incidence radiation collector 5 (sometimes referred to more generally as a normal-incidence radiation collector). The collector 5 may have a multilayer mirror structure which is arranged to reflect EUV radiation (e.g., EUV radiation having a desired wavelength such as 13.5 nm). The collector 5 may have an ellipsoidal configuration, having two focal points. A first one of the focal points may be at the plasma formation region 4, and a second one of the focal points may be at an intermediate focus 6, as discussed below.

The laser system 1 may be spatially separated from the radiation source SO. Where this is the case, the laser beam 2 may be passed from the laser system 1 to the radiation source SO with the aid of a beam delivery system (not shown) comprising, for example, suitable directing mirrors and/or a beam expander, and/or other optics. The laser system 1, the radiation source SO and the beam delivery system may together be considered to be a radiation system.

Radiation that is reflected by the collector 5 forms the EUV radiation beam B. The EUV radiation beam B is focused at intermediate focus 6 to form an image at the intermediate focus 6 of the plasma present at the plasma formation region 4. The image at the intermediate focus 6 acts as a virtual radiation source for the illumination system IL. The radiation source SO is arranged such that the intermediate focus 6 is located at or near to an opening 8 in an enclosing structure 9 of the radiation source SO.

Although Figure 1 depicts the radiation source SO as a laser produced plasma (LPP) source, any suitable source such as a discharge produced plasma (DPP) source or a free electron laser (FEL) may be used to generate EUV radiation.

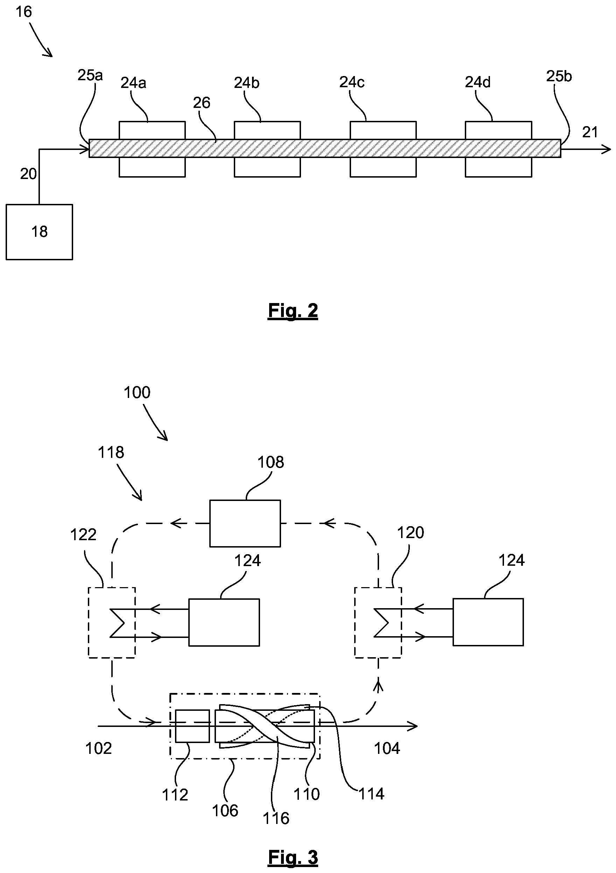

Figure 2 shows an exemplary amplification system 16 for use in the laser system 1 of the radiation source SO shown in Figure 1. The amplification system 16 may also be referred to as an optical amplification system. The laser system 1 may comprise a laser 18, such as the CO2 laser. The laser 18 may be configured to generate a laser beam 20. The laser 18 may be referred to as a seed laser 18 and the laser beam 20 may be referred to as a seed laser beam 20. The laser beam 20 may comprise a plurality of pulses. The laser system 1 may comprise one or more optical elements, such as one or more mirrors, beam expanders, lenses and/or other elements (not shown), for directing the laser beam into the amplification system 16.

The amplification system 16 comprises a plurality of optical amplifiers 24a-24d, four of which are shown in Figure 2. However, it will be appreciated that in other embodiments, the system may comprise more or fewer than four optical amplifiers. In general, the amplification system 16 comprises at least one optical amplifier. Each of the optical amplifiers 24a-24d is configured to amplify the laser beam 20 so as to produce an output laser beam 21. The output laser beam 21 may form the laser beam 2 shown in Figure 1 and which is incident upon the tin at the plasma formation region 4.

The amplification system 16 comprises an optical system 26. The optical system 26 may also be referred to as a relay optical system. The optical system 26 is configured to optically couple or connect at least one of the optical amplifiers 24a-24d to at least one other of the optical amplifiers 24a-24d. In the present embodiment, the optical system 26 is configured to optically couple or connect the amplifiers 24a-24d in series to each other. For example, the optical system 26 may be configured to optically couple or connect the optical amplifiers 24a-24d to each other so that the laser beam 20 is directed from a first amplifier 24a to a second amplifier 24b, from the second amplifier 24b to a third amplifier 24c and from the third amplifier 24c to a fourth amplifier 24d. The optical system 26 may comprise a plurality of optical elements, such as a plurality of mirrors, lenses, telescopes and/or the like. The optical amplifiers 24a-24d may be arranged to sequentially amplify the laser beam 20.

The amplification system 16 may comprise an input 25a, e.g. at which the laser beam 20 enters the amplification system 16. The amplification system 16 may comprise an output 25b, e.g. at which the amplified laser beam 21 exits the amplification system 16. At the input 25a of the amplification system 16, the laser beam may have a power between about 100W and 200W, such as about 140W. At the output 25b of the amplification system 16, the amplified laser beam 21 may have a power between about 25kW and 50kW.

Some embodiments of the present invention relate to an optical amplifier, as now discussed. An example optical amplifier 100 according to an embodiment of the present disclosure is shown schematically in Figure 3. The optical amplifier 100 may form part of the laser system 1 shown in Figure 1 and/or the amplification system 16 shown in Figure 2. For example, any or all of the optical amplifiers 24a-24d shown in Figure 2 may comprise one or more of the optical amplifiers 100 shown in Figure 3.

The optical amplifier 100 is configured to amplify a laser beam 102. That is, the optical amplifier 100 is arranged to receive an input laser beam 102 and to output an amplified laser beam 104. The optical amplifier comprises: a subsystem apparatus 106 and a first pump 108. The subsystem apparatus 106 comprises: an amplification chamber 110, a swirl inducer 112 and a pair of electrodes 114, 116.

The amplification chamber 110 is generally of the form of a tube and may alternatively be referred to as a laser chamber.

The swirl inducer 112 is arranged to induce swirl in a fluid (gas mix) when pumped through the amplification chamber 110 so as to induce a generally helical flow of the fluid through the amplification chamber 110.

The pair of electrodes 114, 116 is arranged to apply a voltage within the amplification chamber 110. In this embodiment, each of the pair of electrodes 114, 116 is generally helical.

It will be appreciated by the skilled person that the subsystem apparatus 106 may further comprise a power supply operable to apply a voltage across the two electrodes 114, 116 although these features are omitted in this schematic representation of the optical amplifier 100 for ease of understanding.

The amplification chamber 110 is configured to receive the laser beam 102 at an inlet and output the amplified laser beam 104 from an outlet.

The first pump 108 is configured to pump a gain medium around a gain medium system 118 comprising the amplification chamber 110 and the swirl inducer 112 of the apparatus 106. The gain medium system 118 of the optical amplifier 100 comprises: the first pump 108; the apparatus 106; and, optionally, one or more heat exchangers 120, 122. The gain medium system 116 of the optical amplifier 100 is a closed loop system. The optical amplifier 100 may form part of a carbon dioxide (CO2) laser. The gain medium may comprise a mixture of gases. For example, the gain medium may comprise a mixture of any combination of the following: carbon dioxide, helium and/or nitrogen.

Optionally, as shown in Figure 3, a first heat exchanger 120 (which forms part of the gain medium system 118) may be arranged to transfer heat from the gain medium in the gain medium system 118 to a cooling fluid in a cooling system 124 after the gain medium has passed through the amplification chamber 110. The first heat exchanger 120 may be referred to as a gas cooler.

Optionally, as shown in Figure 3, the gain medium system 118 of the optical amplifier 100 may further comprise a second heat exchanger 122 arranged to transfer heat from the gain medium in the gain medium system 118 to a cooling fluid in the cooling system 124 after the gain medium has passed through the first pump 108 and before it has entered the amplification chamber 110. The second heat exchanger 122 may either form part of the same cooling system 124 as the first heat exchanger 110. Alternatively, the second heat exchanger 122 may form part of a separate cooling system to that of the first heat exchanger 120.

The cooling system 124 may comprise a second pump (not shown) configured to pump a cooling fluid through the heat exchangers 120, 122 so as to exchange heat with the gain medium. Optionally, the cooling system 124 of the optical amplifier 100 may be a closed loop system and may further comprise a heat sink (not shown) which is arranged to transfer heat away from the cooling fluid in the cooling system 124. For example, the cooling system may be a two-phase system and the heat sink may comprise a condenser. Optionally, the cooling system 124 of the optical amplifier 100 may further comprise a reservoir or tank (not shown) containing cooling fluid. The cooling fluid may comprise a liquid and/or a gas. The cooling fluid may comprise water.

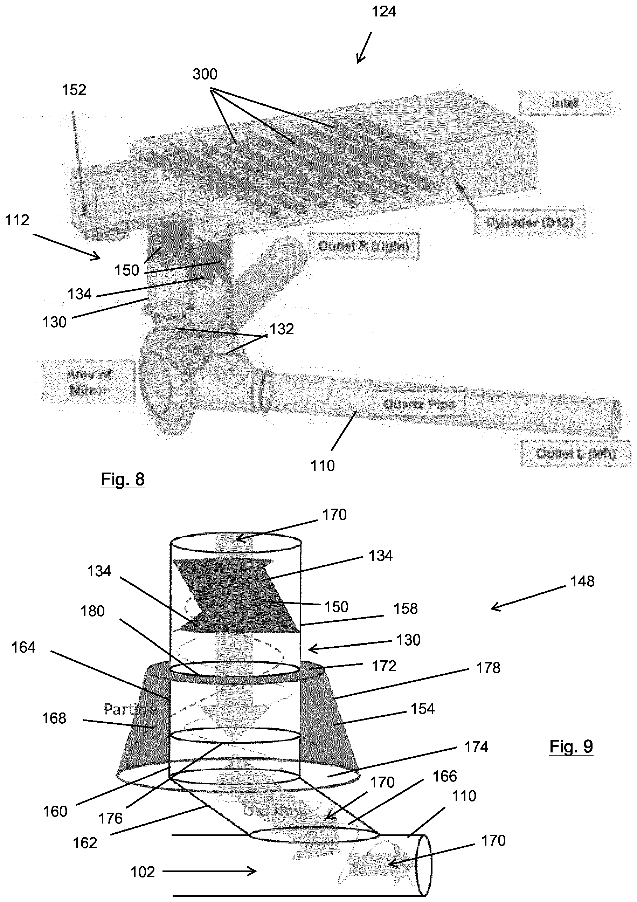

Referring to Figure 8, an example cooling system 124 is shown with piping 300 from the heat exchangers extending therethrough.

Optionally, the optical amplifier 100 may comprise a catalyst (not shown) in part of the gain medium system 118 and disposed such that as the gain medium is pumped around a gain medium system 118 by the first pump 108 at least a portion of the gain medium is adjacent to, or in contact with, the catalyst. The catalyst may comprise any suitable material such as, for example, gold and/or platinum.

In this example, the swirl inducer 112 and the pair of electrodes 114, 116 are configured such that a pitch of the generally helical flow of fluid through the amplification chamber 110 is generally matched to a pitch of the pair of electrodes 114, 116 along the amplification chamber.

The optical amplifier 100 may form part of a carbon dioxide (CO2) laser. In use, the first pump 108 is configured to pump a gain medium around the gain medium system 118 comprising the swirl inducer 112 and the amplifier chamber 110. The gain medium may comprise a mixture of gases. For example, the gain medium may comprise a mixture of any combination of the following: carbon dioxide, helium and/or nitrogen. As the gain medium is pumped through the amplifier chamber 110, the swirl inducer 112 causes the gain medium to follow a helical flow through the amplification chamber 110.

As discussed above, in some known arrangements, the swirl is introduced to the flow of gas through an amplification chamber. However, in some such known arrangements the swirl is induced upstream of the amplification chamber. See, for example, Figure 7.

In some embodiments, the optical amplifier 100 may comprise a plurality of subsystem apparatus 106 of the type described above.

In some embodiments, the amplification chamber 110 may be formed from quartz. That is, the amplification chamber 110 may comprise a quartz tube.

In some embodiments, the pair of electrodes 114, 116 are not disposed in an interior of the amplification chamber 110. For example, the pair of electrodes 114, 116 may be arranged on an exterior of a wall of the amplification chamber 110. Alternatively, the pair of electrodes may be at least partially embedded in a wall of the amplification chamber 110.

In some embodiments, the pair of electrodes 114, 116 are arranged to apply a voltage within the amplification chamber 110 that is generally transverse or perpendicular to an axis of the amplification chamber 110.

In some embodiments (see Figure 8), the swirl inducer 112 may comprise a generally tubular body 130 and two swirl inserts: a turbulator 150 and a screw structure 132, both disposed within the generally tubular body 130.

In some embodiments (see Figure 8), the turbulator comprises a plurality of baffles 134 disposed within the generally tubular body 130. Each of the plurality of baffles 134 may extend generally radially and axially within the generally tubular body 130, and each of the plurality of baffles 134 may be twisted such that a radial direction of the baffle 134 varies along an axial extent of the baffle 134.

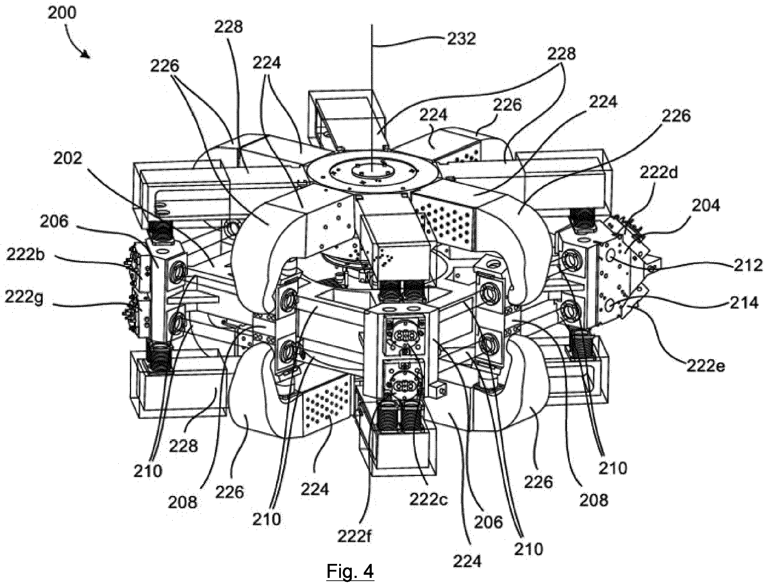

A specific example of an optical amplifier 200 that is an embodiment of an optical amplifier of the type shown schematically in Figures 3 and 8, and described above, is now described with reference to Figures 4 to 7.

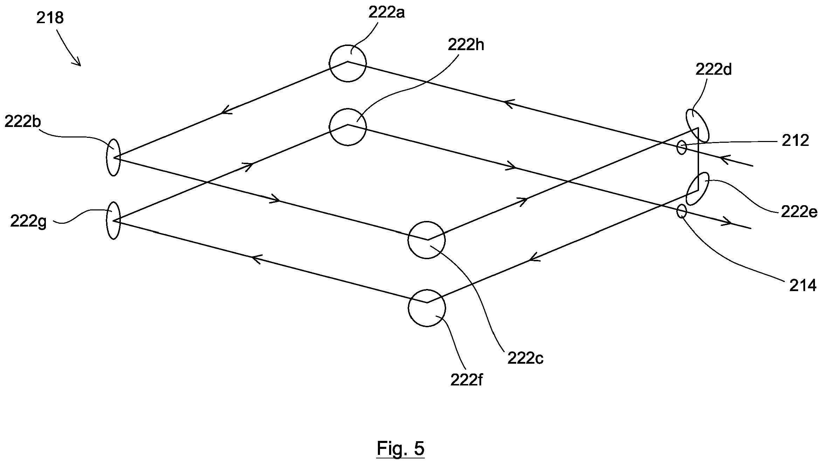

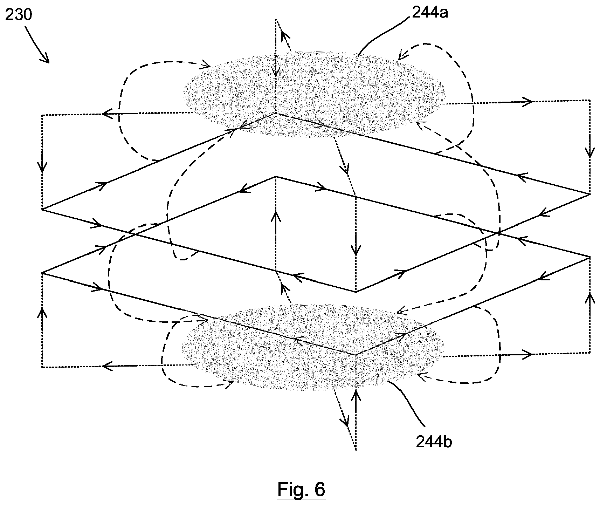

Figure 4 shows the optical amplifier 200. Figure 5 illustrates an optical path defined by the optical amplifier 200 shown in Figure 4. Figures 6 and 7 illustrate gas flow paths within the optical amplifier 200 shown in Figure 4 along which a gain medium flows as part of a gain medium system.

The optical amplifier 200 comprises: a central support body 202, an optical interface module 204, three corner modules 206, four side modules 208 and sixteen tubes 210. The central support body 202 comprises a generally square frame.

The optical interface module 204, the three corner modules 206 and the four side modules 208 are connected to, and supported by, the central support body 202. In particular, the optical interface module 204 and the three corner modules 206 are each provided at a different corner of the generally square frame of the central support body 202. The four side modules 208 are each provided at a different side of the generally square frame of the central support body 202, either between two corner modules 206 or between a corner module 206 and the optical interface module 204.

Two of the tubes 210 extend between each side module 208 and each of the two modules (either a corner module 206 or the optical interface module 204) at the two corners adjacent that side module 208. Each of the tubes 210 extends in a direction that is generally parallel to a side of the generally square frame of the central support body 202. Each of the tubes 210 may be formed from quartz.

Each of the tubes 210 may be considered to be an amplification chamber and may be generally equivalent to the amplification chamber 110 shown in Figures 3 and 8. Each of the tubes 210 is configured to receive a laser beam 102 at an inlet (one end of the tube 210) and output the amplified laser beam 104 from an outlet (a second end of the tube 210).

It will be appreciated that the optical amplifier 200 further comprises at least one pair of electrodes and a power supply operable to apply a voltage across the at least one pair of electrodes and within the tubes 210 although these features are omitted from the optical amplifier 200 shown in Figure 4 for ease of understanding. In practice, a pair of electrodes may be provided on an exterior of each of the tubes 210. One or more radiofrequency (RF) signals may be used to excite the molecules of gas mixture. The one or more radiofrequency signals may comprise one or more radiofrequency pulses. Alternatively, the one or more radiofrequency signals may comprise a continuous wave radiofrequency signal. The one or more radiofrequency signals may be applied to the gas mixture to create a population inversion of the molecules of the gas mixture. This may result in amplification of the laser beam passing through the gas mixture.

It will be appreciated that a swirl inducer (not shown for ease of understanding Figure 4) is provided for each of the amplification chambers (tubes) 210 so as to induce swirl in the fluid when pumped through the amplification chamber 210 so as to induce a generally helical flow of fluid through the amplification chamber 210.

The tubes 210 form part of a closed loop gain medium system that is arranged to provide a flow of gas through each of the tubes 210 during use. This flow of gas through the tubes 210 will be described further below with reference to Figures 6 and 7.

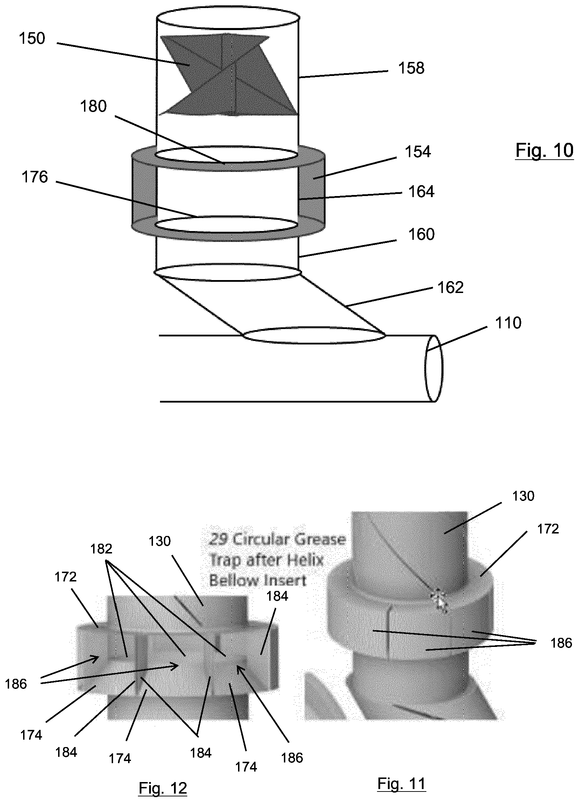

The optical interface module 204 defines an optical inlet 212 and an optical outlet 214. Each of the optical inlet 212 and optical outlet 214 comprises an aperture in a body of the optical interface module 204. In use, an input laser beam 216 (see Figure 11) may be directed into the optical inlet 212. Said input laser beam 216 may then propagate into a first one of the tubes 210. In particular, the input laser beam 216 propagates along an optical path 218 defined by the optical amplifier 200 through each of the tubes 210 in sequence and then out of the optical outlet 214 as an amplified laser beam 220.

Although not shown in Figure 4, each of the optical inlet 212 and optical outlet 214 comprises a window through which the laser beams 216, 220 can propagate while maintaining a working medium (gas mixture) within the tubes 210.

The optical amplifier 200 further comprises a plurality of optical elements 222a-222h, which define the optical path 218. The optical elements 222a-222h are reflective elements or mirrors. The optical elements 222a-222h are configured to direct the input laser beam 216 through a gas mixture in the tubes 210 along the optical path 218. The optical elements 222a-222h are supported by the optical interface module 204 and the three corner modules 206. In particular, each of the optical interface module 204 and the three corner modules 206 supports two optical elements 222a-222h. The optical path 218 comprises a first portion and second portion. The first portion of the optical path 218 is defined by three optical elements 222a-222c, one from each of the three corner modules 206. The first portion of the optical path 218 is generally square, with the laser beam propagating one way around the generally square frame of the central support 202. Similarly, the second portion of the optical path 218 is defined by three optical elements 222f-222h, one from each of the three corner modules 206 and is generally square. The second portion of the optical path 218 is generally square, with the laser beam propagating an opposite way around the generally square frame of the central support 202 to the first portion of the optical path 218. The two optical elements 222d-222e supported by the optical interface module 204 are configured to direct the laser beam from the first portion of the optical path 218 to the second portion of the optical path 218.

The optical amplifier 200 further comprises: at least one first pump (which is not visible in Figure 4); eight first heat exchangers 224; eight return modules 226; and eight second heat exchangers 228.

The first pump may be generally equivalent to the first pump 108 in Figure 3, and is configured to pump a gain medium around a gain medium system 230 that comprises: the second heat exchangers 228, the sixteen tubes 210, the eight return modules 226 and the eight first heat exchangers 224. The gain medium system 230 may be generally equivalent to the gain medium system 118 of the optical amplifier 100 shown in Figure 3. The gain medium system 230 is a closed loop system. The optical amplifier 200 may form part of a carbon dioxide (CO2) laser. The gain medium may comprise a mixture of gases. For example, the gain medium may comprise a mixture of any combination of the following: carbon dioxide, helium and/or nitrogen.

Figure 6 illustrates gas flow paths within the optical amplifier 200 shown in Figure 4 along which a gain medium flows as part of a gain medium system 230. In this embodiment, the gain medium system 230 comprises a first part 230a and a second part 230b. Two turbines (or first pumps) are provided: a first turbine 244a (shown schematically as a grey ellipse) arranged to pump gain medium around the first part 230a of the gain medium system 230; and a second turbine 244b (shown schematically as a grey ellipse) arranged to pump gain medium around the second part 230b of the gain medium system 230. Figure 7 shows an exploded view of the gain medium system 230 in which the first part 230a of the gain medium system 230 and the second part 230b of the gain medium system 230 have been separated in an axial direction for ease of understanding of the gas flows through the gain medium system 230.

The two turbines 244a, 244b are operable to pump gain medium from a central portion of the optical amplifier 200, radially outwards and through the eight second heat exchangers 228. The first turbine 244a is operable to pump gain medium from a central portion of the optical amplifier 200, radially outwards and through four of the second heat exchangers 228; and the second turbine 244b is operable to pump gain medium from a central portion of the optical amplifier 200, radially outwards and through the other four second heat exchangers 228. The flow of gain medium through the second heat exchangers 228 is indicated schematically in Figures 6 and 7 by dotted lines. The second heat exchangers 228 are arranged to transfer heat from the gain medium in the gain medium system 230 to a cooling fluid in the cooling system (not shown) after the gain medium has passed through the first pump 108 and before it has entered the amplification chambers of the sixteen tubes 210.

The gain medium from each of the second heat exchangers 228 then flows axially into one of the three corner modules 206 or the optical interface module 204 in which the flow is split and flows through two of the sixteen tubes 210 towards two of the side modules 208. The flow of gain medium through the tubes 210 is indicated schematically in Figures 11A and 11B by solid lines.

The flow from each pair of generally coaxial tubes 210 flows from both directions into one of the side modules 208, where these flows join and flow into one of the eight return modules 226. Through each of the return modules 226, the flow starts generally radially outwards and curves round until it is generally radially inwards and flows into one of the first heat exchangers 224. The flow of gain medium through the return modules 226 and the first heat exchangers 224 is indicated schematically in Figures 6 and 7 by dashed lines.

The gas mixture of the gain medium may be pumped, for example continuously, through the gain medium system 230. The gas mixture may comprise carbon dioxide, oxygen, carbon monoxide, nitrogen, hydrogen, xenon and/or helium.

In some embodiments, an optical path of each of amplification chambers 110, 210 may be of the order of 0.5 m. In some embodiments, an optical path of the optical amplifier 100, 100a, 200 may be of the order of 8 m.

From this discussion of the illustrated embodiment, it will be appreciated that there are many corners in the system. Furthermore, there are many swirl inducers 112.

As previously discussed, each swirl inducer 112 creates a drop in flow performance, thus increasing the pumping power required.

Each corner in the prior art will typically feature a grease trap 152 to capture particle contamination in the gas mix. An example of this is shown in Figure 8. In this illustrated example, the grease trap 152 is positioned in an extension of the fluid passageway through a cooler 124, prior to a downward bend towards the tube 130 of the swirl inducer 112, and upstream of the turbulator 150 of the swirl inducer 112. Each of these thus occupy a significant space in the overall system.

Referring next to Figure 9, a first embodiment of the present invention is shown in which a cyclonic particle trap 154 is provided downstream of a spiral insert 150 in the form of a turbulator 150. This embodiment can replace or supplement the grease traps 152 shown in Figure 8.

The invention, by way of the cyclonic particle trap 154, provides an apparatus 148 for controlling or reducing particle contamination in a gas passing to, around or through an optical amplifier 200. This apparatus has the tube 130 that defines a flow passageway through the tube 130 towards and into an amplification chamber 110, as this embodiment is installed upstream of the amplification chamber 110.

The tube 130 comprises a first tube 158, a second tube 160, downstream of the first tube 158, and a third tube 162, connected to the second tube 160, which third tube 162 connects the second tube 160 to the amplification chamber 110. The third tube 162 is at an acute angle to both the second tube 160 and the amplification chamber 110 - in this illustration it is at 45 degrees to both, as the second tube 160 is perpendicular to the amplification chamber 110, although other angles may also be provided - for example to accommodate other components of the optical amplifier 200, such as to facilitate packaging of tubes 158, 160, 162, fluid pathways and amplification chambers within the amplifier 200 (bearing in mind that multiple such apparatus 148 will likely be installed in the amplifier 200).

A second (or more) swirl insert (not shown) - for example a screw structure 132 as per Figure 8, may be provided in the second or third tube 160, 162, or in the amplification chamber 110, whereby the optical amplifier 200, or the apparatus 148 for controlling or reducing particle contamination in a gas passing to, around or through the optical amplifier 200, then comprises at least two swirl inserts, the swirl inserts arranged to impart a desired swirling flow pattern to the gas through at least a part of the tube 130.

In this embodiment, the cyclonic particle trap 154 is downstream of the first swirl insert 150 for collecting particle contamination from a radially outer portion of the swirling gas as that gas - and the particles in that radially outer portion of the swirling gas, can pass through a gap 164 between the first tube 158 and the second tube 160 into the cyclonic particle trap 154.

The first swirl insert 150 (i.e. the turbulator 150) comprises vanes in the form of a pair of coiling baffles 134 in this example. The vanes are arranged to impart a cyclonic or helical flow to the gas - in this embodiment a pair of helical flow patterns, as illustrated by the two swirling lines 166, 168. The first of these swirling lines 166 is a solid line, representing a helical or cyclonic flow of the gas from between an upper surface of one of the baffles and a lower surface of the other of the baffles. The second of these swirling lines 168 is dashed and represents a helical or cyclonic flow of a particle entrained within the gas from between a lower surface of the one of the baffles and the upper surface of the other of the two coiling baffles.

The two gas flows swirl together downstream of the baffles, but particle contamination in the swirling gas mix tends to move into or towards the radially outer portion of the swirling gas due to the mass of the particles being higher than the mass of the gas. This cyclonic flow thus creates cyclonic filtration of the gas. As a result, the particles in the radially outer portion of the swirling gas can pass into the cyclonic particle trap 154 through the above mentioned gap 164 as illustrated by the path of the dashed line 168.

With the present invention, therefore, the gas swirls with a cyclonic or helical flow around a flow direction of the gas through the flow passageway towards and into the amplification chamber, which flow direction can be represented by the central axis of the tube 130 - and by the gas flow arrows 170 in Figure 9.

In this embodiment, the at least one cyclonic particle trap 154 bridges the gap 164 between the first two tubes 158, 160. With this configuration, the cyclonic particle trap can maintain containment of the gas flowing through the apparatus 148, while collecting the particles in the cyclonic particle trap 154..

In this embodiment, the first and second tubes 158, 160 are co-axially arranged. This maximises the effectiveness of the cyclonic filtration. For example, bending around a corner, such as the corners created by the angled third pipe, the strength of the cyclonic flow can be reduced - the flow will decelerate. Having the second swirl insert can help to maintain the swirl in the gas flow.

With the present invention, the known benefits of swirling the flow can be utilised in the optical amplifier, and while it is already swirling the present invention's cyclonic particle trap can make use of the cyclonic filtration effect that additionally results. The cyclonic filtration is thus achieved with minimal additional power requirements from the pumps that are used to power the gas flow around the flow passageways through the optical amplifier.

In this embodiment, the cyclonic particle trap 154 comprises a tapering wall 178 - here it is an outer wall of a particle collection and containment area of the cyclonic particle trap. The particle collection and containment area of the cyclonic particle trap also has flat and parallel top and bottom walls 172, 174, and a generally circular cross section. Thus the cyclonic particle trap has a frustoconical form. The frustoconical form is arranged with a smaller diameter at an upstream end of the cyclonic particle trap and a larger diameter at a downstream end of the cyclonic particle trap. This helps to encourage the particles to slow and fall into a collection area at the bottom of the trap 154.

In this embodiment, the collection area comprises an annular collection tray. The annular collection tray has the tapering outer side wall and a cylindrical inner side wall defined by an upstream end 176 of the second tube 160. The bottom wall 174 completes the annular collection tray. Due to the effectively raised lip of the inner side wall, particles collected in the annular collection tray will tend to be retained in the annular collection tray.

In this embodiment, the first and second tubes 158, 160 are oriented in a vertical configuration, such that the gas flows in a downwards direction from the first swirl insert 150 past the gap 164 and into the second tube 162. With this configuration, the annular collection tray is located at the bottom of the cyclonic particle trap, and surrounds a lower part of the tube to define a trough into which the collected particles may collect. This is a downstream end of the cyclonic particle trap.

In this embodiment, the gap 164 between first and second tubes 158, 160 is positioned upstream of the annular collection tray. In this example, the gap starts at the bottom 180of the first tube 158, which bottom is joined to the inner diameter of the top wall 172 of the cyclonic particle trap, and the gap thus starts at the upstream end of the cyclonic particle trap 154.

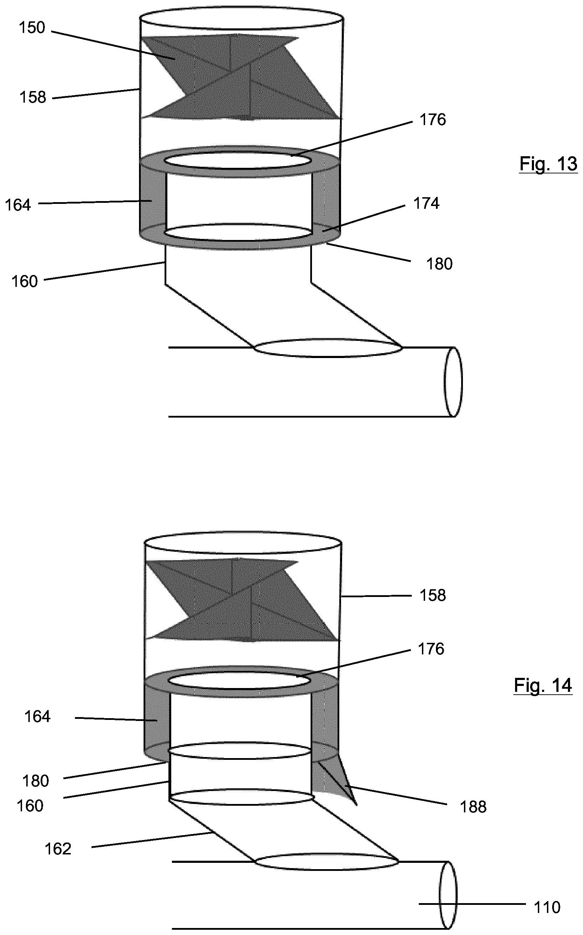

The cyclonic particle trap 154 may comprise a portion or wall with a grease lining. A grease lining - like in the grease trap 152, can help to resist any tendency for the particles to escape back out of the trap 154 after collection in the cyclonic particle trap 154. However, it is not essential for this to be provided as the cyclonic effect prevails throughout the operation of the apparatus 148, thus tending to keep particles within the particle trap 154. Note though that some embodiments may provide additional mechanisms for containing the collected particles (see, for example, Figure 14), or a suction device for extracting the particles from the trap 154 - i.e. to remove them from the apparatus 148.

For example, in some embodiments, the cyclonic particle trap may comprises a labyrinthine portion for trapping the particles. This may similarly resist any tendency for the particles to escape back out of the trap after collection in the first cyclonic particle trap. A skilled person will realise a plurality of possible labyrinthine designs can achieve this effect, for example by way of a series of overlapping and/or intertwining walls and/or overhangs. These walls or overhangs may even have a grease lining to further improve particle retention, although that is again only optional.

Referring next to Figure 10, a similar but alternative configuration for the apparatus 148 is show. In this embodiments, in place of the frustoconical form for the cyclonic particle trap, the cyclonic particle trap has a generally cylindrical form. In this embodiment, the gap 164 again starts from the bottom 180 of the first tube 158, and it ends at the upstream end 176 of the second tube 160. However, there is no inner wall for the cyclonic particle trap 154. Instead, the cyclonic particle trap is just a surrounding groove with a rectangular radial section around the gap 164. Dust particles again collect in the cyclonic particle trap, and may be contained by way of a grease lining, or may be removed by a suction device attached to the cyclonic particle trap, or may simply be retained by the ongoing cyclonic flow past the gap 164.

Referring next to Figures 11 and 12, the cyclonic particle trap 154 is adapted further. In this embodiment, the first tube extends beyond the top wall 172 of the cyclonic particle trap, and is continuous with the second tube, instead thus being a continuous tube from the first swirl insert (turbulator 150) through to the amplification chamber 110. However, the tube has a plurality of slots or apertures 182 in its sidewall, providing points of entry for the particles into the cyclonic particle trap 154.

Furthermore, in this embodiment, the slots 182 open up downstream of the top wall 172 of the cyclonic particle trap 154, and although the top wall 172 is shown to be still flat (perpendicular in plane to the flow direction through the fluid passageway), the bottom wall 174 is instead papering or angled to provide an integrated lip, and thus a trough - similar to the first embodiment, but instead with the tapering wall being the inner wall. This trough defines a annular collection tray for particle collection, this time with a substantially triangular section.

A further characteristic of this embodiment is that the cyclonic particle trap comprises a segmented design with segmented collection chambers 186 spaced around the tube 130. In this embodiment, each segment is of a common design, and they have abutting sidewalls 184 extending parallel to the flow direction through the tube. Other shapes can be utilised instead.

In this embodiment, there is a single slot or aperture 182 for each of the segmented collection chambers 186. The slots or apertures 182 are positioned upstream of the tapering distal wall 174 of these segmented collection chambers 186. These slots or apertures 182 allow the particles to enter the segmented collection chambers 186.

Referring next to Figure 13, a further modified embodiment is shown. In this embodiment, the first tube 158 is larger (bigger diameter) than the second tube 160. The two tubes 158, 160 are configured such that the first tube overlaps the second tube, and thus define an annular gap 164 between the first and second tubes 158, 160. That annular gap 164 is closed at its bottom by a connecting wall that defines the bottom wall 174 thereof, thus forming an annular collection tray for collection of particles from the swirling gas flow exiting the swirl insert 150. In this embodiment the swirl insert 150 is still positioned upstream of the second tube 160, such that swirling gas exiting the swirl insert 150 can separate the particles in its gas into the annular gap 164 again due to the cyclonic filtration effect on the swirling gas.

Referring next to Figure 14, a modified version of Figure 13 is shown. In this embodiment, the gap 164 still defines an annular collection tray between the tubes 158, 160, but it now has a slot or groove 188in its bottom wall for collection of the particles, as mentioned previously. In this embodiment, the slot or groove 188 tapers downwardly following the direction of swirl of the swirl insert 150 so that the swirling gas tends to carry the particles deeper into the slot or groove 188. A suction device may be provided at the end of that slot or groove 188 for extraction of the particles by the suction device connected thereto.

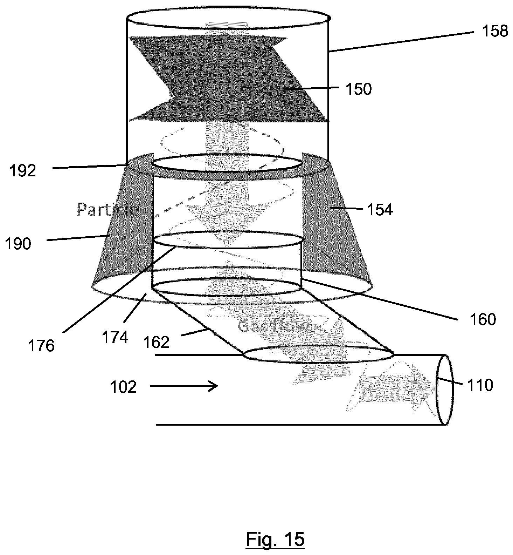

Referring finally to Figure 15, a modification is made to the embodiment of Figure 14. Here, the first tube 158 has a tapering end portion 190, which tapering end portion 190 expands in a downstream direction to define a frustoconical form for the cyclonic particle trap 154, like that of Figure 9, albeit with the larger diameter first tube 158. This contrasts to the generally cylindrical form in Figure 14. As before with Figure 14, in this embodiment the (this time tapering) end portion of the first tube 158 overlaps the upstream end 176 of the second tube 160, and the connecting wall at its end connects it to the second tube 160. This again defines an annular gap 164 between the first and second tubes 158, 160, but now with a tapering outer profile. This defines the first cyclonic particle trap 154.

The upstream end 176 of the second tube 160 is positioned downstream of an upstream end 192 of the tapering end portion 190. This then allows the tapering portion to be expanding to define a larger space through which the particles may enter the first cyclonic particle trap prior to their collection in the annular collection tray surrounding the upstream end 176 of the second tube 160.

Although Figures 9 to 15 only show a small portion of an optical amplifier, and only in schematic form, it is to be appreciated that embodiments of the present disclosure relate typically to an amplification system for use in a laser system, the system comprising: a plurality of optical amplifiers, at least one or each optical amplifier of the plurality of optical amplifiers comprising an optical amplifier 100, 100a, 200, amplification chamber 110 or apparatus 148 generally of the form described above.

Some embodiments of the present disclosure relate to a laser system comprising: a laser configured to generate a laser beam; and an amplification system configured to amplify the laser beam.

Some embodiments of the present disclosure relate to a radiation system comprising: an EUV radiation source; and a laser system.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. An apparatus for controlling or reducing particle contamination in a gas passing to, around or through an optical amplifier, the apparatus comprising:
a tube defining a flow passageway through the tube;
at least one swirl insert, arranged to impart a desired swirling flow pattern to the gas through at least a part of the tube; and
at least one cyclonic particle trap either or both, around or downstream of the at least one swirl insert for collecting particle contamination from a radially outer portion of the swirling gas;
wherein the at least one swirl insert comprises vanes arranged to impart a cyclonic or helical flow to the gas, whereby particle contamination in the gas tends to move into or towards the radially outer portion of the swirling gas.

2. The apparatus of claim 1, wherein the tube is for installation in, upstream of, or as a part of an amplification chamber of the optical amplifier.

3. The apparatus of claim 1 or claim 2, comprising at least two swirl inserts wherein the at least two swirl inserts are in the tube.

4. The apparatus of claim 3, wherein the tube is a first tube, and the second swirl insert is in a second tube, downstream of the first tube, and the at least one cyclonic particle trap bridges a gap between the two tubes.

5. The apparatus of any one of the preceding claims, wherein the first and second tubes are co-axially arranged.

6. The apparatus of claim 3, wherein the tube is a continuous tube from the first insert to the second swirl insert, albeit with one or more slot or aperture in its sidewall, the or each slot or aperture being located along at least a partial length of the tube, and the at least one cyclonic particle trap bridging the one or more slot or aperture.

7. The apparatus of any one of the preceding claims, wherein the first cyclonic particle trap is cylindrical.

8. The apparatus of any one of claims 1 to 6, wherein the first cyclonic particle trap comprises a tapering wall.

9. The apparatus of claim 8, wherein the tapering wall generates a frustoconical form for first cyclonic particle trap.

10. The apparatus of claim 8 or claim 9, wherein the tapering wall has a circular cross section and is arranged with a smaller diameter at or closer to or adjacent to an upstream end of the first cyclonic particle trap and a larger diameter at or closer to or adjacent to a downstream end of the first cyclonic particle trap.

11. The apparatus of any one of the preceding claims, wherein the gas flows in a downstream direction from the first swirl insert.

12. The apparatus of any one of the preceding claims, wherein the tube is oriented in a vertical configuration.

13. The apparatus of any one of the preceding claims, wherein the first cyclonic particle trap comprises an annular collection tray.

14. The apparatus of claim 13, wherein the annular collection tray surrounds the tube to define a trough into which trapped particles may collect.

15. The apparatus of claim 13 or claim 14, wherein the annular collection tray is at the downstream end of the first cyclonic particle trap.

16. The apparatus of any one of claim 1 to 15, when dependent upon claim 6, wherein the the slot(s) or aperture(s) is/are positioned upstream of the annular collection tray.

17. The apparatus of any one of the preceding claims, wherein the first cyclonic particle trap surrounds at least part of the tube.

18. The apparatus of any one of the preceding claims, wherein the first cyclonic particle trap comprises a segmented design with segmented collection chambers spaced around the tube.

19. The apparatus of claim 18, when dependent upon claim 6 wherein the slot(s) or aperture(s) is/are located such that there is at least one slot or aperture for each of the segmented collection chambers.

20. The apparatus of any one of the preceding claims, wherein the first cyclonic particle trap comprises a tapering distal wall, tapering radially outwards and forwards.

21. The apparatus of any one of the preceding claims, wherein the first tube is larger than the second tube.

22. The apparatus of claim 21, wherein the first tube overlaps the second tube.

23. The apparatus of claim 22, the configuration defining an annular gap between the first and second tubes.

24. The apparatus of claim 23, wherein that annular gap forms the annular collection tray, with a connecting wall between the first tube and the second tube defining a base for the annular collection tray.

25. The apparatus of claim 24, wherein the annular collection tray has a slot or groove in its base for collection of the particles.

26. The apparatus of any one of the preceding claims, wherein the first tube has a tapering end portion, which tapering end portion expands in a downstream direction.

27. The apparatus of claim 26, wherein the tapering end portion at least partially overlaps the second tube, and a connecting wall at its end connects it to the second tube.

28. The apparatus of claim 26 or claim 27, wherein an upstream end of the second tube is positioned downstream of the upstream end of the tapering end portion.

29. An optical amplifier comprising:
a flow passageway for a gas of the optical amplifier;
a swirl insert in the flow passageway arranged to impart a desired swirling flow pattern to the gas; and
a cyclonic particle trap either or both around or downstream of the swirl insert for collecting particle contamination from a radially outer portion of the swirling gas;
wherein the swirl insert comprises vanes arranged to impart a cyclonic or helical flow to the gas, whereby particle contamination in the gas tends to move into or towards the radially outer portion of the swirling gas.

30. The amplifier of claim 29, wherein the flow passageway is either in or upstream of an amplification chamber.

31. The amplifier of claim 29 or claim 30, wherein the flow passageway is defined by one or more tubes.

32. The amplifier of any one of claims 29 to 31, comprising the apparatus of any one of claims 1 to 28, albeit without a second swirl insert.

33. The amplifier of any one of claims 29 to 31, comprising the apparatus of any one of claims 1 to 28.

34. A laser system comprising a laser configured to generate a laser beam and an optical amplifier according to any one of claims 29 to 33.

35. A radiation system comprising an extreme ultraviolet (EUV) radiation source, a flow passageway for a gas for flowing through a laser system of the radiation system, a swirl insert arranged to impart a desired swirling flow pattern to the gas, and a cyclonic particle trap either or both around or downstream of the swirl insert for collecting particle contamination from a radially outer portion of the swirling gas;
wherein the swirl insert comprises vanes arranged to impart a cyclonic or helical flow to the gas, whereby particle contamination in the gas tends to move into or towards the radially outer portion of the swirling gas mix.

36. The radiation system of claim 35, comprising one or more installations of the apparatus of any one of claims 1 to 28.

37. The radiation system of claim 35, comprising one or more installations of the optical amplifier of any one of claims 29 to 33.

38. The radiation system of claim 35, comprising one or more laser systems of claim 34.

39. A lithographic system comprising a radiation system according to any one of claims 35 to 38.

40. A method of controlling or reducing particle contamination in an optical amplifier (or a laser system, or a radiation system, or a lithographic system, comprising such an optical amplifier), the method comprising:
installing a first swirl insert in a flow passageway of the optical amplifier; and
installing a cyclonic particle trap along the flow passageway;
wherein:
the flow passageway is either or both in or upstream of an amplification chamber of the optical amplifier;
the swirl insert comprises vanes arranged to impart a cyclonic or helical flow to the gas, whereby particle contamination in the gas tends to move into or towards a radially outer portion of the flowing gas;
the cyclonic particle trap is either or both around or downstream of the swirl insert in the flow passageway; and
the cyclonic particle trap is for collecting particle contamination from the radially outer portion of the swirling gas.

41. The method of claim 40, carried out using the apparatus of any one of claims 1 to 28.

42. The method of claim 40, carried out using the optical amplifier of any one of claims 29 to 33.

43. The method of claim 40, carried out in the laser system of claim 34.

44. The method of claim 40, carried out in the radiation system of any one of claims 35 to 39.

45. The method of claim 40, carried out in the lithographic system of claim 39.
